Europäisches Patentamt

European Patent Office

Office européen des brevets

(11) Veröffentlichungsnummer: **0 357 139**
**A2**

## (12) EUROPÄISCHE PATENTANMELDUNG

(21) Anmeldenummer: 89202178.3

(51) Int. Cl.⁵: **G02B 6/44**

(22) Anmeldetag: 29.08.89

(30) Priorität: 31.08.88 DE 3829428

(43) Veröffentlichungstag der Anmeldung:
**07.03.90 Patentblatt 90/10**

(84) Benannte Vertragsstaaten:
**DE ES FR GB IT**

(71) Anmelder: **Philips Patentverwaltung GmbH
Wendenstrasse 35 Postfach 10 51 49
D-2000 Hamburg 1(DE)**

(84) **DE**

Anmelder: **N.V. Philips' Gloeilampenfabrieken
Groenewoudseweg 1
NL-5621 BA Eindhoven(NL)**

(84) **ES FR GB IT**

(72) Erfinder: **Becker, Johann A., Dr.
Zöllnerstrasse 66
D-5063 Overath(DE)**
Erfinder: **Schneider, Jörg-Michael, Dr. rer. nat.
Johann-Bendel-Strasse 3 a
D-5060 Bergisch-Gladbach(DE)**
Erfinder: **Lindner, Helmut, Dr. rer. nat.
Pfarrer-Maybaum-Weg 8
D-5000 Köln 80(DE)**

(74) Vertreter: **Koch, Ingo, Dr.-Ing. et al
Philips Patentverwaltung GmbH
Wendenstrasse 35 Postfach 10 51 49
D-2000 Hamburg 1(DE)**

(54) Verfahren zur Herstellung eines Lichtwellenleiter-Flachbandes.

(57) Die Erfindung betrifft ein Verfahren zur Herstellung eines Lichtwellenleiter-Flachbandes, bei welchem mehrere Lichtwellenleiter (LWL) mit Kleber beschichtet und danach in nebeneinander gedrückter Lage durch eine Härteeinrichtung zur Härtung des Klebers geführt werden. LWL-Flachbänder verbesserter Qualität bei höherer Fertigungsgeschwindigkeit ergeben sich dadurch, daß auf das LWL-Flachband (15) nachfolgend Deckschichten (5,6) einer aushärtbaren Masse in flüssigem Zustand aufgebracht und danach in einer zweiten Härteeinrichtung (20) ausgehärtet werden, durch welche das LWL-Flachband (15) in vorbestimmter Lage geführt wird.

Fig.1

## Verfahren zur Herstellung eines Lichtwellenleiter-Flachbandes

Die Erfindung bezieht sich auf ein Verfahren zur Herstellung eines Lichtwellenleiter-Flachbandes, bei welchem mehrere Lichtwellenleiter (LWL) mit Kleber beschichtet und danach in nebeneinander gedrückter Lage durch eine Härteeinrichtung zur Härtung des Klebers geführt werden.

Bei einem durch die EP-A 165 632 bekannten Verfahren dieser Art werden die LWL, nachdem mittels einer Rolle Kleber aufgebracht wurde, über ein um 90° gedrehtes Rollensystem durch eine Härteeinrichtung geführt. Infolge der Umlenkung der Bandkonfiguration sind die LWL in der Härteeinrichtung eng und spaltlos aneinandergedrückt. Mit diesem bekannten Verfahren erreicht man eine hervorragende Gleichmäßigkeit der LWL-Mittenabstände, wie es für die Herstellung von Mehrfach-Spleißverbindungen wünschenswert ist. Bei diesem Verfahren ergeben sich jedoch Schwierigkeiten wegen der geringen Klebermengen. Der erforderliche mechanische Zusammenhalt der LWL ist nur mit speziellen Klebern genügend fest erreichbar. Dann ist die Fertigungsgeschwindigkeit beschränkt.

Eine unmittelbare Anlage der LWL im Flachband wird auch mit einem Verfahren nach der älteren Anmeldung P 37 33 124 erreicht, bei welchem die durch ein Kleberbad geführten LWL durch eine Düse gezogen werden, deren Breite durch einen federnd gegen die LWL gedrückten Gleitschieber an die Abmessungen der aneinanderliegenden LWL angepaßt wird. Bei diesem Verfahren wird zwar eine größere Klebermenge aufgebracht, jedoch können sich an den gegenüberliegenden Flachseiten des Flachbandes ungleichmäßige Kleberaufträge bilden, welche zu unerwünschten Spannungen im Flachband führen. Außerdem besteht die Gefahr, daß die Gängigkeit des Gleitschiebers durch den Kleber behindert wird.

Wenn die LWL durch eine nicht verstellbare Düse geführt werden (vgl. EP-A 194 891), läßt sich, da die LWL-Außendurchmesser in einem Toleranzbereich schwanken können, keine spaltfreie Aneinanderlage der LWL im Flachband garantieren. Da ferner recht dicke Kleberschichten aufgebracht und gehärtet werden müssen, ergeben sich Ungleichmäßigkeiten der Flachbandoberflächen, die insbesondere beim Einschieben der Flachbänder in Speicherkassetten hinderlich sind. Die Aushärtung ist nur bei relativ geringen Fertigungsgeschwindigkeiten möglich.

Der Erfindung liegt die Aufgabe zugrunde, das Verfahren der eingangs genannten Art derart zu verbessern, daß sich LWL-Flachbänder verbesserter Qualität ergeben. Ferner soll die Möglichkeit einer erhöhten Fertigungsgeschwindigkeit bestehen.

Die Lösung gelingt dadurch, daß auf das LWL-Flachband nachfolgend Deckschichten einer aushärtbaren Masse in flüssigem Zustand aufgebracht und danach in einer zweiten Härteeinrichtung ausgehärtet werden, durch welche das LWL-Flachband in vorbestimmter Lage geführt wird.

Erfindungsgemäß wird die Verklebung in zwei Fertigungsschritten durchgeführt. An die mechanische Festigkeit des ersten Kleberauftrags brauchen keine hohen Anforderungen gestellt zu werden. Der Kleber braucht nur den engen Aneinanderhalt der LWL beim Aufbringen der folgenden Deckschichten zu gewährleisten. Dabei können Kleber verwendet werden, welche eine hohe Fertigungsgeschwindigkeit zulassen und schnell und problemlos insbesondere durch UV-Strahlung härtbar sind.

Man braucht ferner keinen besonderen Wert auf eine außergewöhnliche Gleichmäßigkeit des Kleberauftrags zu legen.

Die Deckschichten können mittels relativ weit tolerierter Durchzugsdüsen aufgebracht werden. Dabei werden nur noch kleine Schichtdicken aufgetragen, welche schnell vorzugsweise durch UV-Strahlung aushärtbar sind. Es ergeben sich besonders glatte Oberflächen.

Vorzugsweise sind Härte und E-Modul der Deckschichten größer als die entsprechenden Werte des ausgehärteten Klebers. Der weiche innere Kleber kann keine inneren Bandspannungen hervorrufen, die gewünschte Bandfiguration wird dagegen durch die äußeren Deckschichten bestimmt, welche härter und widerstandsfähig gegen spätere Beanspruchungen des LWL-Flachbandes sind.

Es ist vorteilhaft, daß der E-Modul des Klebers einen Wert im Bereich von 0,1 bis 400 MPa, vorzugsweise 1 bis 50 MPa hat. Der E-Modul der Deckschichten sollte einen Wert im Bereich von 10 bis 2000 MPa, vorzugsweise 200 bis 400 MPa haben und mindestens das 5- fache des E-Moduls des Klebers betragen.

Mehrfach beschichtete LWL-Flachbänder, bei welchen die einzelnen Schichten aus verschiedenen speziellen Aufgaben angepaßten Materialien bestehen, sind an sich durch die EP-A 194 891 bekannt. Dabei werden die Schichten jedoch in üblicher Weise mittels einer weit zu tolerierenden festen Düse aufgebracht, so daß das spaltlose Aneinanderliegen der LWL nicht gewährleistet ist.

Der Reibungskoeffizient der Deckschichten sollte gering sein, damit das LWL-Flachband gleitfahig ist und leicht Z.B. in Speicherkassetten eingeschoben werden kann.

Zu diesem Zweck hat es sich als vorteilhaft erwiesen, dem Material der Deckschichten Stoffe zur Verringerung des Reibungskoeffizienten beizumischen. Besonders geeignet sind solche Stoffe, die sich bevorzugt im Außenbereich der Deckschicht ablagern.

Da harte Deckschichten einen ausreichenden mechanischen Schutz für die LWL bieten, können vorteilhaft LWL mit einem weichen Primär-Coating verwendet werden, wodurch Dämpfungsverluste durch Biegungen der LWL nahezu ausgeschlossen werden. Besonders vorteilhaft ist es, daß die LWL vor ihrer Aneinanderklebung mit einem weichen Primär-Coating versehen werden, dessen E-Modul kleiner als 400 MPa ist.

Es ist empfehlenswert, daß die Deckschichten und der Kleber aus chemisch gleichartigen Materialgruppen bestehen.

Als besonders geeignet haben sich für die Deckschichten und den Kleber Materialien der Gruppe der Polyurethanacrylate oder der Siloxankopolymeren oder deren Mischungen erwiesen.

Wenn der Kleber nur in den Anlagebereichen der LWL aufgebracht wird und dort die LWL auf einem Umfangsbereich von weniger als 180° bedeckt, lassen sich die Deckschichten und Coating-Schichten der LWL besonders leicht beispielsweise mit einem Werkzeug gemäß der älteren Anmeldung P 38 02 577.9 abschälen.

Durch entsprechende Gestaltung der Düse, durch welche die verklebten LWL zur Aufbringung der Deckschicht gezogen werden, läßt sich erreichen, daß die Deckschichten auf beiden Bandseiten unterschiedlich sind.

Dadurch kann man insbesondere beim Verkleben der LWL möglicherweise auftretende Bandwölbungen ausgleichen.

Auch kann man das LWL-Band in gekrümmter Lage durch die zweite Härteeinrichtung führen. Auf diese Weise lassen sich gewölbte, tordierte oder gewendelte Flachbänder herstellen, wie sie an sich durch die EP-A 194 891 bekannt sind.

Eine besonders vorteilhafte Einrichtung zur Ausübung des erfindungsgemäßen Verfahrens, welche in nach der EP-A 165 632 bekannter Weise mit folgenden Elementen ausgestattet ist:
- Vorratsrollen für mit zumindest einem Primär-Coating versehene LWL
- einer Beschichtungseinrichtung zur Aufbringung eines Klebers auf die von den Vorratsrollen abgezogenen LWL
- einer ersten Härteeinrichtung zur Aushärtung des Klebers, welcher Einrichtungen zum Aneinanderdrücken der LWL zugeordnet sind,
ist gekennzeichnet durch folgende Merkmale:
- eine Beschichtungseinrichtung zur Aufbringung von Deckschichten in flüssigem Zustand auf das mit ausgehärtetem Kleber vorverfestigte LWL-Flachband
- eine zweite Härteeinrichtung zur Aushärtung der Deckschichten

- eine Einrichtung zur Führung des LWL-Flachbandes in vorbestimmter Lage durch die Härteeinrichtung.

Wenn die Verklebung der LWL und das Aufbringen der Deckschichten "on line" in einem gemeinsamen Arbeitsgang erfolgen, können die LWL-Flachbänder mit sehr hoher Fertigungsgeschwindigkeit hergestellt werden. Die Durchlaufzeiten für beide Verfahrensschritte sind gering.

Die Erfindung wird anhand der Zeichnung näher erläutert.

Fig. 1 zeigt die Stirnansicht eines erfindungsgemäß hergestellten LWL-Flachbandes

Fig. 2 verdeutlicht den erfindungsgemäßen Verfahrensablauf mittels einer schematisch angedeuteten angepaßten Fertigungseinrichtung.

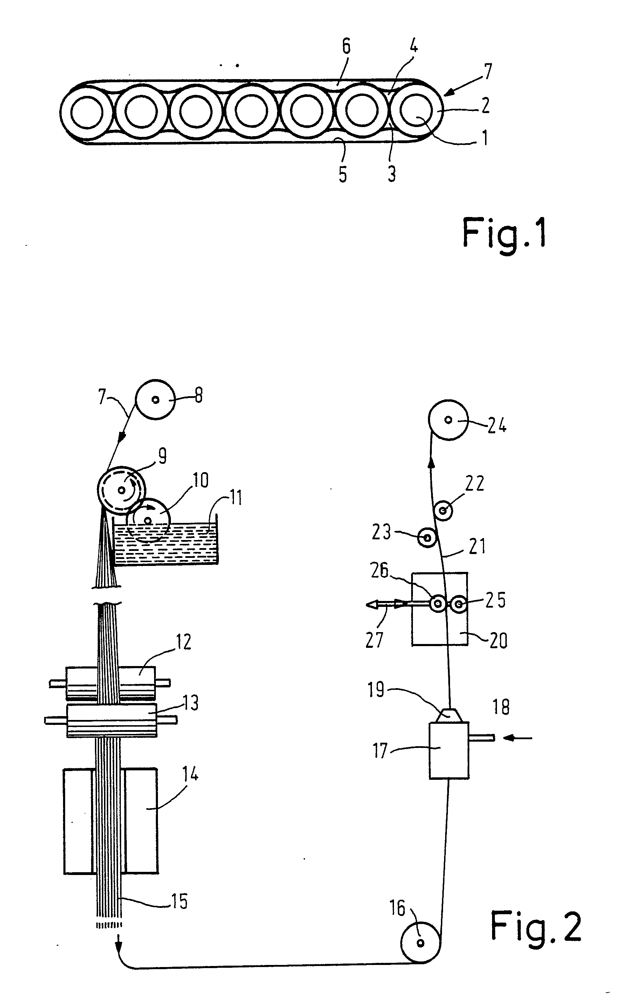

Sieben im wesentlichen aus $SiO_2$ bestehende LWL 7, deren Kerne 1 jeweils von einer relativ weichen polsternden Primär-Coating-Schicht 2 umgeben sind, wurden zu einem in Fig. 1 dargestellten LWL-Flachband verbunden. Benachbarte LWL 1 stoßen unmittelbar aneinander an und sind über Klebebereiche 3 und 4 miteinander verklebt. Der Kleber hat etwa gleiche mechanische und chemische Eigenschaften wie die Primär-Coating-Schichten 2.

Die Deckschichten 5 und 6 bestehen dagegen aus einem wesentlich härteren und mechanisch widerstandsfähigeren flüssig aufgebrachten Material. Sie brauchen die Rand-LWL nicht unbedingt voll zu überdecken.

Im Gegensatz zu einer aufextrudierten Schicht entstehen bei einer in flüssiger Form aufgebrachten und danach insbesondere durch UV-Strahlung gehärteten Deckschicht keine Schrumpfspannungen, welche Dämpfungserhöhungen der LWL zur Folge haben könnten.

Gemäß Fig. 2 verlaufen von Rollen 8 abgezogene LWL 7 zunächst über eine Kleberauftragsrolle 9, auf welche von einer Benetzungsrolle 10 UV-härtbarer flüssiger Kleber 11 übertragen wird. Danach werden die LWL 7 zwischen Rollen 12 und 13 hindurchgeführt, deren Drehachsen senkrecht zu denen der Rolle 9 und 10 verlaufen. Dadurch wird erreicht, daß die vom Kleber benetzten Bereiche der LWL um 90° in die Anlagebereiche zweier LWL gedreht werden. Wesentlich ist für die vorliegende Erfindung, daß die LWL 7 durch die 90°-Verschwenkung einen Anlagedruck gegeneinander erfahren, welcher bewirkt, daß die LWL in unmittelbar spaltloser Aneinanderlage durch die UV-Härteeinrichtung 14 verlaufen.

Danach wird ein vorverfestigtes Band 15 aus sieben LWL 7 erhalten, deren enger Zusammenhalt auch im Verlaufe der folgenden Verfahrensschritte zur Aufbringung der Deckschichten 5 und 6 (Figur 1) erhalten bleibt.

Das vorverfestigte Band 15 wird über eine Um-

lenkrolle 16 durch einen ein flüssiges UV-härtbares Deckschichtmaterial enthaltenden und über die Zuleitung 18 nachgefüllten Behälter 17 gezogen und verläßt diesen durch eine entsprechend der gewünschten Band-Querschnittskontur geformte Düse 19. Nach Aushärtung der Deckschichten in der UV-Härteeinrichtung 20 wird das fertige LWL-Flachband 21 über Lagefixierungsrollen 22 und 23 auf der Aufwickelrolle 24 aufgewickelt.

Eine besonders geeignete Ausführung eines mit einer Düse 19 versehenen Behälters 17 ist in der älteren Anmeldung P 38 06 010.8 beschrieben.

In der Härteeinrichtung 20 ist schematisch eine Bandverformungseinrichtung angedeutet, welche aus zwei beidseitig des LWL-Flachbandes angeordneten Auslenkrollen 25 bzw. 26 besteht, die in Richtung des Doppelpfeils 27 hin und her bewegbar sind. Dadurch erhält man ein in entspanntem Zustand gewellt verlaufendes LWL-Flachband, welches beim losen Einbringen in eine Kabelhülle eine Überlänge aufweist, so daß auf die Kabelhülle einwirkende Zugkräfte nicht sofort auf die LWL des LWL-Flachbandes übertragen werden.

**Ansprüche**

1. Verfahren zur Herstellung eines Lichtwellenleiter-Flachbandes, bei welchem mehrere Lichtwellenleiter (LWL) mit Kleber beschichtet und danach in nebeneinander gedrückter Lage durch eine Härteeinrichtung zur Härtung des Klebers geführt werden,
dadurch gekennzeichnet, daß auf das LWL-Flachband (15) nachfolgend Deckschichten (5,6) einer aushärtbaren Masse in flüssigem Zustand aufgebracht und danach in einer zweiten Härteeinrichtung (20) ausgehärtet werden, durch welche das LWL-Flachband (15) in vorbestimmter Lage geführt wird.

2. Verfahren nach Anspruch 1,
dadurch gekennzeichnet, daß Härte und E-Modul der Deckschichten (5,6) größer als die entsprechenden Werte des Klebers (3,4) sind.

3. Verfahren nach Anspruch 1 oder 2,
dadurch gekennzeichnet, daß der E-Modul des Klebers (3,4) einen Wert im Bereich von 0,1 bis 400 MPa, vorzugsweise 1 bis 50 MPa hat.

4. Verfahren nach einem der Ansprüche 1 bis 3,
dadurch gekennzeichnet, daß der E-Modul der Deckschichten (5,6) einen Wert im Bereich von 10 bis 2000 MPa, vorzugsweise 200 bis 400 MPa hat, und daß dieser Wert mindestens um das 5-fache größer als der E-Modul des Klebers (3,4) ist.

5. Verfahren nach einem der Ansprüche 1 bis 4,
dadurch gekennzeichnet, daß der Reibungskoeffizient der Deckschichten (5,6) kleiner als 0,45 ist.

6. Verfahren nach einem der Ansprüche 1 bis 5,
dadurch gekennzeichnet, daß die LWL (7) vor ihrer Aneinanderklebung mit einem weichen Primär-Coating (2) versehen werden, dessen E-Modul kleiner als 400 MPa ist.

7. Verfahren nach einem der Ansprüche 1 bis 6,
dadurch gekennzeichnet, daß für die Deckschichten (5,6) und den Kleber (3,4) chemisch gleichartige Materialgruppen verwendet werden.

8. Verfahren nach einem der Ansprüche 1 bis 7,
dadurch gekennzeichnet, daß die Deckschichten (5,6) und/oder der Kleber (3,4) aus einem Material der Gruppe der Polyurethanacrylate oder der Siloxankopolymeren oder aus deren Mischungen hergestellt werden.

9. Verfahren nach einem der Ansprüche 1 bis 8,
dadurch gekennzeichnet, daß der Kleber (3,4) nur in den Anlagebereichen der LWL (7) aufgebracht wird und dort die LWL auf einem Umfangsbereich von weniger als 180° bedeckt.

10. Verfahren nach einem der Ansprüche 1 bis 9,
dadurch gekennzeichnet, daß die Deckschichten (5,6) auf beiden Bandseiten unterschiedlich aufgebracht werden.

11. Verfahren nach einem der Ansprüche 1 bis 10,
dadurch gekennzeichnet, daß das LWL-Band (15) in gekrümmter Lage durch die zweite Härteeinrichtung (20) geführt wird.

12. Einrichtung zur Ausübung des Verfahrens nach einem der Ansprüche 1 bis 6, mit
- Vorratsrollen (8) für mit zumindest einem Primärcoating (2) versehene LWL (7)
- einer Beschichtungseinrichtung (9,10) zur Aufbringung eines Klebers (11) auf die von den Vorratsrollen (8) abgezogenen LWL (7)
- einer ersten Härteeinrichtung (14) zur Aushärtung des Klebers (11), welcher Einrichtungen (12,13) zum Aneinanderdrücken der LWL (7) zugeordnet sind,
gekennzeichnet durch
- eine Beschichtungseinrichtung (17,18,19) zur Aufbringung von Deckschichten (5,6) in flüssigem Zustand auf das mit ausgehärtetem Kleber (3,4) vorverfestigte LWL-Flachband (15)
- eine zweite Härteeinrichtung (20) zur Aushärtung der Deckschichten (5,6)
- eine Einrichtung (22,23 bzw. 25,26,27) zur Führung des LWL-Flachbandes (15) in vorbestimmter Lage durch die Härteeinrichtung (20).

Fig.1

Fig.2

PHD 88-172